# EUROPEAN PATENT SPECIFICATION

(11) **EP 1 812 510 B1**
(45) Date of publication and mention of the grant of the patent: **06.01.2010**
(21) Application number: 05818167.8
(22) Date of filing: 02.11.2005
(51) Int. Cl.: C08L 37/00, C08L 63/00, C08L 67/00

(54) **AMPHIPHILIC BLOCK COPOLYMER-TOUGHENED EPOXY VINYL ESTER AND UNSATURATED POLYESTER RESINS**
MIT EINEM AMPHIPHILEN BLOCKCOPOLYMER GEHÄRTETER EPOXY-VINYLESTER UND UNGESÄTTIGTE POLYESTERHARZE
ESTER DE VINYLE D'EPOXY DURCI PAR COPOLYMERE BLOC AMPHIPHILE ET RESINES DE POLYESTER INSATUREES

(30) Priority: 10.11.2004 US 626618 P
(43) Date of publication of application: 01.08.2007
(73) Proprietor: DOW GLOBAL TECHNOLOGIES INC., Midland MI 48674 (US); Regents of the University of Minnesota, Minneapolis, MN 55455-2090 (US)
(72) Inventor: PHAM, Ha, Q., Lake Jackson, TX 77566 (US); VERGHESE, Kandathil, E., Lake Jackson, TX 77566 (US); BATES, Frank, S., St. Louis Park, MN 55416 (US)
(74) Representative: Raynor, John
(86) International application number: PCT/US2005/039964
(87) International publication number: WO 2006/052728

(56) References cited:
- US-A- 5 523 337
- US-A1- 2004 034 124
- PHAM S ET AL: "Toughening of vinyl ester resins with modified polybutadienes" POLYMER, ELSEVIER SCIENCE PUBLISHERS B.V, GB, vol. 36, no. 17, August 1995 (1995-08), pages 3279-3285, XP004025622 ISSN: 0032-3861

## Description

The present invention relates to epoxy vinyl ester and unsaturated polyester resins modified with block copolymers. More particularly, the present invention relates to epoxy vinyl ester and unsaturated polyester resins modified with amphiphilic block copolymers to increase the fracture resistance or toughness of the cured epoxy vinyl ester or unsaturated polyester resin.

Thermosetting resins such as epoxy vinyl ester resins and unsaturated polyester resins when cured are known for their thermal and chemical resistance. The cured epoxy vinyl ester resins and unsaturated polyester resins also display good mechanical properties but they lack toughness and tend to be very brittle upon cure. The lack of toughness of the resins is especially true as the crosslink density or Tg of the resins increases.

Heretofore, one class of thermosetting resins, epoxy resins, has been studied extensively specifically to improve their chemical and thermal properties including toughness.

For example, there have been several studies related to increasing the fracture resistance or toughness of epoxy resins by incorporating into the epoxy resin various block copolymers. Much of the previous work is focused on the use of amphiphilic diblock copolymers having an epoxy miscible block and an epoxy immiscible block in which the epoxy miscible block is poly(ethylene oxide) (PEO) and the immiscible block is a saturated polymeric hydrocarbon. Although effective at providing templated thermosets with appealing property sets, the known block copolymer materials are too expensive to be used in some applications.

For example, Journal of Polymer Science, Part B: Polymer Physics, 2001, 39(23), 2996-3010 discloses that the use of a poly(ethylene oxide)-b-poly(ethylene-alt-propylene) (PEO-PEP) diblock copolymer provides micellar structures in cured epoxy systems; and that block copolymers self-assembled into vesicles and spherical micelles can significantly increase the fracture resistance of model bisphenol A epoxies cured with a tetrafunctional aromatic amine curing agent. And, Journal of the American Chemical Society, 1997, 119(11), 2749-2750 describes epoxy systems with self-assembled microstructures brought about using amphiphilic PEO-PEP and poly(ethylene oxide)-b-poly(ethyl ethylene) (PEO-PEE) diblock copolymers. These block copolymer containing-systems illustrate characteristics of self-assembly.

Other block copolymers incorporating an epoxy-reactive functionality in one block have been used as modifiers for epoxy resins to achieve nanostructured epoxy thermosets. For example, Macromolecules, 2000, 33(26) 9522-9534 describes the use of poly(epoxyisoprene)-b-polybutadiene (BIxn) and poly(methylacrylate-co-glycidyl methacrylate)-b-polyisoprene (MG-I) diblock copolymers that are amphiphilic in nature and are designed in such a way that one of the blocks can react into the epoxy matrix when the resin is cured. Also, Journal of Applied Polymer Science, 1994, 54, 815 describes epoxy systems having submicron scale dispersions of poly(caprolactone)-b-poly(dimethylsiloxane)-b-poly(caprolactone) triblock copolymers.

Still other self-assembled amphiphilic block copolymers for modifying thermosetting epoxy resins to form nanostructured epoxy thermosets are known. For example, Macromolecules, 2000, 33, 5235-5244 and Macromolecules, 2002, 35, 3133-3144, describe the addition of a poly(ethylene oxide)-b-poly(propylene oxide) (PEO-PPO) diblock and a poly(ethylene oxide)-b-poly(propylene oxide)-b-poly(ethylene oxide) (PEO-PPO-PEO) triblock to an epoxy cured with methylene dianiline where the average size of the dispersed phase in the diblock-containing blends is of the order of 10-30 nm. And, a polyether block copolymer such as a PEO-PPO-PEO triblock is also known to be used with an epoxy resin as disclosed in Japanese Patent Application Publication No. H9-324110.

While some of the previously known diblock and triblock copolymers mentioned above are useful for improving the toughness of epoxy resins, there is no mention in the prior art as to whether the known block copolymers are useful for toughening epoxy vinyl ester resins or unsaturated polyester resins; or whether any advantage is obtained by blending amphiphilic block copolymers with epoxy vinyl ester resins or unsaturated polyester resins.

It is therefore desired to provide a block copolymer that is useful for improving the toughness of epoxy vinyl ester resins and unsaturated polyester resins by a self assembly process.

The present invention is directed to a curable thermosetting resin composition with increased toughness comprising (a) an epoxy vinyl ester resin, an unsaturated polyester resin, or mixtures thereof; (b) a reactive monomer; and (c) an amphiphilic block copolymer toughening agent. Herein, the epoxy vinyl ester resins, the unsaturated polyester resins and the mixtures thereof will be referred to collectively as the "ester resin(s)."

The amphiphilic block copolymer used in the curable ester resin composition contains at least one ester resin miscible block segment and at least one ester resin immiscible block segment; such that when the ester resin composition is cured, the toughness of the resulting cured ester resin composition is increased.

One embodiment of the present invention is directed to an ester resin modified with an amphiphilic polyether block copolymer containing at least one ester resin miscible block segment and at least one ester resin immiscible block segment; wherein the miscible block segment comprises at least one polyether structure; and wherein the immiscible block segment comprises at least one polyether structure provided that the polyether structure of said immiscible block segment contains at least one or more alkylene oxide monomer units having at least four carbon atoms; such that when the ester resin composition is cured, the toughness of the resulting cured ester resin composition is increased.

Some of the beneficial features of using the amphiphilic polyether block copolymer of the present invention to toughen resins include, for example: (1) the self assembly characteristics of the amphiphilic block copolymer, (2) the ability of the block copolymer to assemble at a nanometer length scale, (3) the ability of the block copolymer to create a very uniform dispersion across the entire resin monomer matrix, and (4) the ability to use low loading levels of the block copolymer toughening agent to achieve toughening results.

Some of the advantages of using the amphiphilic polyether block copolymer of the present invention include, for example: (1) the ability of the block copolymer to improve toughness of the host resin without adversely affecting other key properties such as glass transition, modulus and viscosity of the host resin, (2) the ability of the resin to retain certain aesthetic qualities such as appearance that is crucial in certain applications, and (3) the ability to consistently and reproducibly create morphology prior to or during the curing of the resin itself.

The present invention includes a composition with improved toughness comprising an ester resin modified with an amphiphilic block copolymer, such as a polyether block copolymer, as a toughening agent for the ester resin. These modified ester resins, when cured, show impressive improvements in fracture toughness (defined by K_{1c}) with only minor changes in modulus and glass transition temperature (Tg) behavior.

Templated thermoset ester resin polymers with nanoscale self-assembled morphologies, exhibit an attractive combination of improved toughness and retention of material properties such as modulus and Tg. The thermoset ester resin polymers can be prepared, for example, by dispersing an amphiphilic block copolymer in a resin monomer matrix, where the copolymer can undergo self-assembly, and then curing the resin. Self-assembled resins that exhibit surfactant-like morphologies provide enhanced fracture toughness at very low (for example, from 1 weight percent to 5 weight percent) block copolymer loadings. Amphiphilic block copolymers that are capable of self assembly when mixed with the resin monomer must have at least one block that is miscible with the resin/curing agent mixture prior to cure, and at least one block that is immiscible with the resin/curing agent mixture prior to cure.

One embodiment of the present invention is aimed at preparing an all amphiphilic polyether block copolymer, for example, a diblock copolymer, such as those based on poly(ethylene oxide)-b-(butylene oxide) (PEO-PBO), that self assembles in ester resin systems. At sufficiently high butylene oxide block lengths (for example, Mn=1000 or greater) these block structures are found to be effective at templating the resin monomer into micellar structures such as spherical micelles.

The amphiphilic polyether block copolymer useful in the present invention may include any of the aforementioned known self assembling amphiphilic block copolymers containing at least one ester resin miscible block segment and at least one ester resin immiscible block segment; such that when the ester resin composition is cured, the toughness of the resulting cured ester resin composition is increased.

Preferably, the amphiphilic polyether block copolymer useful in the present invention includes one or more polyether block copolymers comprising at least one ester resin material miscible polyether block segment derived from an alkylene oxide such as ethylene oxide (EO) and at least one ester resin material immiscible polyether block segment derived from an alkylene oxide with at least greater than 3 carbon atoms, for example 1,2-epoxy butane known commonly as butylene oxide (BO). The immiscible block segment may also be comprised of mixtures of C₄ or higher carbon analogue monomers that are copolymerized together to provide the immiscible block segment. The immiscible block may also contain lower molecular weight co-monomers such as EO. The polyether block copolymer contains at least one ester resin miscible polyether block segment, E, and at least one ester resin immiscible polyether block segment, M.

The present invention polyether block copolymer component may contain at least two or more amphiphilic polyether block copolymer segments. Examples of the amphiphilic polyether block copolymer may be selected from the group consisting of a diblock (EM); a linear triblock (EME or MEM); a linear tetrablock (EMEM); a higher order multiblock structure (EMEM)ₓE or (MEME)ₓM, where X is an integer value ranging from 1-3; a branched block structure; or a star block structure; and any combination thereof. The amphiphilic polyether block copolymer consisting of the branched block structures or star block structures contains at least one ester resin monomer miscible block and at least one ester resin monomer immiscible block.

Examples of the ester resin miscible polyether block segment, E, include a polyethylene oxide block, a propylene oxide block, a poly(ethylene oxide-co-propylene oxide) block, a poly(ethylene oxide-ran-propylene oxide) block, and mixtures thereof. Preferably, the ester resin miscible polyether block segment useful in the present invention is a polyethylene oxide block.

Generally, the ester resin immiscible polyether block segment, M, useful in the present invention is an epoxidized alpha olefin having carbon atoms of from C₄ to C₂₀. Generally, the ester resin immiscible polyether block segment, M, useful in the present invention is an epoxidized alpha olefin having a carbon atom of from C₄ to C₂₀. Examples of the ester resin immiscible polyether block segment, M, include a polybutylene oxide block, a polyhexylene oxide block derived from 1,2 epoxy hexane, a polydodecylene oxide block derived from 1,2-epoxy dodecane, and mixtures thereof. Preferably, the ester resin immiscible polyether block segment useful in the present invention is a polybutylene oxide block.

In another embodiment of the present invention, when the polyether block copolymer has a multiblock copolymer structure, other block segments in addition to E and M may be present in the block copolymer. Examples of other miscible segments of the block copolymer include polyethylene oxide, polymethyl acrylate, and mixtures thereof. Examples of other immiscible segments of the block copolymer include polyethylene propylene (PEP), polybutadiene, polyisoprene, polydimethyl siloxane, polybutylene oxide, polyhexylene oxide, polyalkyl methyl methacrylate, such as polyethyl hexyl methacrylate, and mixtures thereof.

The amphiphilic polyether block copolymers which can be employed in the practice of the present invention include for example, but are not limited to, a diblock copolymer, a linear triblock, a linear tetrablock, a higher order multiblock structure, a branched block structure, or star block structure. For example, the polyether block copolymer may contain a polyethylene oxide block, propylene oxide block or poly(ethylene oxide-co-propylene oxide) block; and an alkylene oxide block based on a C₄ or higher carbon analog block, such as, for example, 1,2-epoxybutane, 1,2-epoxyhexane, 1,2-epoxydodecane, or 1,2-epoxyhexadecane block. Other examples of the alkylene oxide blocks may include Vikolox^{™} epoxidized alpha olefins, including C10-C30+ olefins, commercially available from Atofina.

Preferred examples of suitable block copolymers useful in the present invention include amphiphilic polyether diblock copolymers such as, for example, poly(ethylene oxide)-b-poly(butylene oxide)(PEO-PBO) or amphiphilic polyether triblock copolymers such as, for example, poly(ethylene oxide)-b-poly(butylene oxide)-b-poly(ethylene oxide) (PEO-PBO-PEO).

The amphiphilic polyether block copolymer used in the present invention can have a number average molecular weight (Mn) of from 1,000 to 30,000, for the combination of both block lengths. Most preferably, the molecular weight of the polyether block copolymer is between 3,000 and 20,000. Prior art materials derived from block copolymers in which the immiscible block has a very low solubility parameter (polymeric hydrocarbons) microphase separate prior to cure. The polyether containing block structures of the present invention, on the other hand, can either be microphase separated prior to cure at the preferred molecular weights, or form micelles while the curing process is being performed.

The composition of the block copolymer can range from 90 percent ester resin miscible polyalkylene oxide block and 10 percent ester resin immiscible polyalkylene oxide block to 10 percent ester resin miscible polyalkylene oxide block and 90 percent ester resin immiscible polyalkylene oxide block.

Small amounts of homopolymers from each of the respective block segments may be present in the final amphiphilic polyether block copolymer of the present invention. For example, from 1 weight percent to 50 weight percent, preferably from 1 weight percent to 10 weight percent, of a homopolymer that is similar or identical in structure with the miscible or the immiscible block can be added to the composition of the present invention comprising a ester resin monomer system and an amphiphilic polyether block copolymer.

The amount of amphiphilic block copolymers employed in the ester resin composition of the present invention depends on a variety of factors including the equivalent weight of the polymers, as well as the desired properties of the products made from the composition. In general, the amount of amphiphilic polyether block copolymers employed in the present invention may be from 0.1 weight percent to 30 weight percent, preferably from 0.5 weight percent to 10 weight percent and, most preferably, from 1 weight percent to 5 weight percent, based on the weight of the resin composition.

The amphiphilic polyether block copolymers of the present invention preferably increase the toughness or fracture resistance of the ester resin, preferably at low loadings of block copolymer (for example less than 5 weight percent) in the ester resin composition. Generally, addition of from 1 wt percent to 5 wt percent of a polyether block copolymer to the ester resin composition increases the toughness of the ester resin composition by a factor of 1.2 times to 2.5 times that of a control.

The present invention thermosetting ester resin composition may contain at least one or more amphiphilic polyether block copolymers mixed with the ester resin. In addition, two or more different amphiphilic block copolymers may be blended together to make up the block copolymer component of the present invention so long as one of the block copolymers is a polyether block copolymer. More than one block copolymer can be combined to gain additional control of the nanostructure, that is, shape and dimension.

In addition to the polyether block copolymer used in the resin composition, other amphiphilic block copolymers may be used as a secondary block copolymer component in the resin composition of the present invention. Examples of additional amphiphilic block copolymers, other than the polyether block copolymers of the present invention, which can be employed in the practice of the present invention include for example, but are not limited to, poly(ethylene oxide)-b-poly(ethylene-alt propylene) (PEO-PEP), poly(isoprene-b-ethylene oxide) block copolymers (PI-b-PEO), poly(ethylene propylene-b-ethylene oxide) block copolymers (PEP-b-PEO), poly(butadiene-b-ethylene oxide) block copolymers (PB-b-PEO), poly(isoprene-b-ethylene oxide-b-isoprene) block copolymers (PI-b-PEO-PI), poly(isoprene-b-ethylene oxide-b-methylmethacrylate) block copolymers (PI-b-PEO-b-PMMA); and mixtures thereof. Generally, the amount of secondary amphiphilic block copolymer used in the resin composition may be from 0.1 weight percent to 30 weight percent.

The polyether block copolymers of the present invention provide uniformly dispersed and uniformly scaled nano-sized structures which preferably form (template) in the liquid resin matrix due to micellization brought about by the balance of immiscibility of one block segment and miscibility of the other block segment. The micellar structures are preserved into the cured ester resin thermoset, or form during the curing process, producing ester resin thermoset materials exhibiting improved toughness, improved fracture resistance, impact resistance while maintaining Tg, modulus and other properties at the same level as the unmodified ester resin thermoset. The micellar morphology of the nano-templated resin can be for example, spherical, worm-like, and vesicles. Micellar morphologies are advantageously obtained at low (for example, less than 5 weight percent) concentrations of block copolymer; that is, the morphological features are not associated with one another or packed into a three dimensional lattice. At higher concentrations self-assembled structures can form spherical, cylindrical, or lamellar morphological features that are associated with one another by lattice interactions, also at a nanometer size scale.

It is believed that the increase in fracture resistance occurs when the block copolymers self-assemble into a nanoscale morphology such as worm-like, vesicle or spherical micelle morphology. While it is not well understood how to predict which micelle morphology, if any, will occur in different resins, it is believed that some of the factors that determine the self-assembled morphology may include, for example, (i) the choice of monomers in the block copolymer, (ii) the degree of asymmetry in the block copolymer, (iii) the molecular weight of the block copolymer, (iv) the composition of the ester resin, and (v) the choice of curing agent for the resin. Apparently, a nanoscale morphology plays an important role in creating toughness in an ester resin product of the present invention.

As an illustration of one embodiment of the present invention, an ester resin, such as an epoxy vinyl ester resin, may be blended with a polyether block copolymer, for example, a poly(ethylene oxide)-b-poly(butylene oxide) (PEO-PBO) diblock copolymer wherein the PBO is the epoxy vinyl ester resin immiscible hydrophobic soft component of the diblock copolymer and the PEO is the epoxy vinyl ester resin miscible component of the diblock copolymer. The curable epoxy vinyl ester resin composition including the PEO-PBO block copolymer increases the impact resistance of the cured epoxy vinyl ester resin body.

The PEO-PBO diblock copolymer can be indicated generally by the chemical formula (PEO)ₓ-(PBO)_{y} wherein the subscripts x and y are the number of monomer units of polyethylene oxide and polybutylene oxide in each block, respectively and are positive numbers. Generally, x should be from 15 to 85 and the molecular weight of the structural part (PEO)ₓ should be from 750 to 100,000. Subscript y should be from 15 to 85 and the molecular weight represented by the structural part (PBO)_{y} should be from 1,000 to 30,000. Also, a single PEO-PBO diblock copolymer may be used alone, or more than one PEO-PBO diblock may be combined to be used as well.

In one embodiment of the present invention, a PEO-PBO block copolymer is used wherein the diblock copolymer has 20 percent PEO and 80 percent PBO to 80 percent PEO and 20 percent PBO; and has block sizes of molecular weights (Mn) of PBO 2000 or higher and molecular weights of PEO 750 or higher; and provides various self-assembled morphologies. For example, the present invention includes a diblock with a PBO block length of from 2,500 to 3,900 that provides spherical micelles. Another example of the present invention includes a diblock with a PBO segment of 6,400 that provides worm-like micelles. Still another example of the present invention is a diblock with a short (Mn=750) PEO block segment that provides an agglomerated vesicle morphology. Yet another example of the present invention includes a mixture of a PEO-PBO diblock with a low molecular weight PBO homopolymer that provides a spherical micelle in which the PBO homopolymer sequesters into the micelle without forming a separate macrophase; the PBO homopolymer macrophase separates when added without the diblock present.

In general, the amphiphilic polyether block copolymers used in the present invention can be prepared in a single sequential synthetic polymerization process, wherein one monomer is polymerized to prepare an initial block, followed by simple introduction of the second monomer type which is then polymerized onto the terminus of the first block copolymer until the polymerization process is complete. It is also possible to make the blocks separately, preparing the first block and then polymerizing the second block onto the terminus of the first block in a second synthetic step. The difference in solubility of the two block fragments is sufficient that the block copolymer may be used to modify the ester resin thermoset material.

The block copolymers can be prepared by Group I metals such as sodium, potassium or cesium moderated anionic polymerization. The polymerization can be carried out neat or using a solvent. The temperature of the polymerization reaction can be for example from 100°C to 140°C at atmospheric pressure to slightly above atmospheric pressure. The synthesis of the block copolymer may be carried out, for example, as described in Whitmarsh, R.H., In Nonionic Surfactants Polyoxyalkylene Block Copolymers; Nace, V.M., Ed.; Surfactant Science Series; Vol. 60; Marcel Dekker, N.Y., 1996; Chapter 1.

In a preferred embodiment, the block segments of the block copolymers are prepared by the ring opening polymerization of 1,2-epoxy alkenes.

A thermoset material is defined as being formed of polymer chains of variable length bonded to one another via covalent bonds, so as to form a three-dimensional network. Thermoset ester resin materials include unsaturated polyesters or vinyl esters containing a free radical initiator.

The thermosetting ester resin monomers useful in the present invention comprises resins with a plurality of polymerizable unsaturated bonds in the molecule such as epoxy vinyl ester resins, unsaturated polyester resins, and mixtures thereof.

The epoxy vinyl ester resins which can be employed in the practice of the present invention include any of the known epoxy vinyl ester resins prepared by any known method. For example, the epoxy vinyl ester resins described in U.S. Patent No. 6,329,475, may be used in the present invention. As described in U.S. Patent No. 6,329,475, the vinyl ester resins are those that are prepared by the reaction of (a) an epoxy resin with (b) an unsaturated carboxylic acid and dissolved in a monomer such as styrene or styrene and one or more other monomers.

Also useful in the present invention are known epoxy vinyl ester resins that are commercially available. For example, suitable epoxy vinyl esters are those commercially available from The Dow Chemical Company under the trademark DERAKANE, commercially available from Ashland Chemical under the trademark HETRON, and commercially available commercially available from Reichhold Chemical under the trademark DION.

Preferred epoxy vinyl ester resins that may be employed in the present invention include for example those epoxy vinyl ester resins supplied by The Dow Chemical Company under the trademark DERAKANE. One particularly preferred epoxy vinyl ester resin, for example, is the general purpose resin known as DERAKANE 411-350 epoxy vinyl ester resin, which contains approximately 45 percent monomeric styrene. Other DERAKANE epoxy vinyl ester resins which can be employed in the present invention, for example, include DERAKANE 411-C-50 epoxy vinyl ester resin containing approximately 50 percent monomeric styrene; DERAKANE 470-36 epoxy vinyl ester resin containing approximately 36 percent monomeric styrene; DERAKANE 470-300 epoxy vinyl ester resin containing approximately 33 percent monomeric styrene; DERAKANE 510-C-350 epoxy vinyl ester resin, a brominated vinyl ester resin containing approximately 33 percent monomeric styrene; DERAKANE 790 epoxy vinyl ester resin containing approximately 45 percent monomeric styrene; DERAKANE 8084 epoxy vinyl ester resin, a flexibilized epoxy vinyl ester resin containing approximately 40 percent monomeric styrene; and mixtures thereof.

Generally, the amount of epoxy vinyl ester used in the present invention may be in the range of from 10 weight percent to 95 weight percent.

The unsaturated polyester resins which can be employed in the practice of the present invention include for example those resins that contain carboxylic ester groups and carbon-carbon double bonds as recurring units along the polymer backbone. The unsaturated polyester resins of the present invention are usually prepared by reacting (a) ethylenically unsaturated dicarboxylic or polycarboxylic acids or anhydrides to impart the unsaturation, (b) saturated dicarboxylic acids to modify the resin, and (c) diols or polyols. The unsaturated polyesters have the general structural formula:

(R-O-C(=O)-R'-C(=O)-O)ₓ(R-O-C(=O)-CH=CH-C(=O)-O)_{y}

wherein R and R' are alkylene or arylene radicals in the diol and saturated acid respectively, and x and y are variable numbers which depend upon the composition and condensation conditions.

Typical di- or polycarboxylic acids or anhydrides thereof used in the preparation of the unsaturated polyesters include phthalic acids, iso- or terephthalic acid, adipic acid, succinic acid, sebacic acid, maleic acid, fumaric acid, citraconic acid, chloromaleic acid, allylsuccinic acid, itaconic acid, mesaconic acid, citric acid, pyromellitic acid, trimesic acid, tetrahydrophthalic acid, thiodiglycollic acid, and mixtures thereof. These acids and anhydrides may be independently or jointly used.

Typical di- or polyhydric compounds used in the preparation of the unsaturated polyesters include for example ethylene glycol, diethylene glycol, triethylene glycol, propylene glycol, dipropylene glycol, glycerol, 2-butene-1,4-diol, hydrogenated bisphenol A, bisphenoldioxyethyl ether, bisphenoldioxypropyl ether, neopentyl glycol, and mixtures thereof.

Generally, the amount of unsaturated polyester used in the present invention may be in the range of from 10 weight percent to 95 weight percent.

A variety of reactive monomers can be added to the epoxy vinyl ester resins or the unsaturated polyester resins to lower their viscosity for use in the curable resin composition of the present invention. In general, the reactive monomers may be employed in an amount of from 10 to 60 parts by weight, preferably from 20 to 50 parts by weight per 100 part by weight based on the total weight of the curable composition.

Specific examples of such reactive monomers include styrene, chlorostyrenes; methyl styrenes such as s-methyl styrene and p-methyl styrene; vinyl benzyl chloride, divinyl benzene, indene, allyl styrene, and allyl benzene; unsaturated esters such as methyl methacrylate, methyl acrylate and other lower aliphatic esters of acrylic and methacrylic acids; allyl acetate, diallyl phthalate, diallyl succinate, diallyl adipate, diallyl sebacate, diethylene glycol bis(allyl carbonate), triallyl phosphate and diethylene glycol bis(allyl carbonate); triallyl phosphate and other allyl esters; vinyl toluene, diallyl chloroendate, diallyl tetrachlorophthalate, and ethylene glycol diethacrylate; amides such as acrylamides; vinyl chloride; and mixtures thereof. Among the above examples, styrene is preferred.

Generally, the amount of reactive monomer used in the present invention may be in the range of from 0.1 weight percent to 70 weight percent.

When the amphiphilic polyether block copolymer of the present invention is present in ester resins such as the epoxy vinyl ester resin or unsaturated polyester resin composition, curing can be accomplished by any means suitable for curing ester resins. The ester resins can be suitably cured by means of peroxides, azo compounds or other compounds that produce free radicals by the application of heat, radiation, or chemical promotion. Suitable curing compounds include peroxides such as methyl ethyl ketone peroxide, cumene hydroperoxide, benzoyl peroxide, t-butyl hydroperoxide, t-butylperbenzoate, combinations thereof. The amount of the initiator added will preferably vary from 0.05 to 2.5 percent by weight of reactants. More rapid curing may be accomplished by the addition of accelerating agents such as cobalt, vanadium, or lead naphthenates or octoates, aniline derivatives such as N,N-dimethylaniline or N,N-diethyl aniline, acetamides such as N-N-dimethylacetoacetamide or N,N-diethylacetoacetamide, or combinations thereof.

The curable ester resin composition according to the present invention may also contain usual additives such as fillers, dyes, pigments, thixotropic agents, surfactants, fluidity control agents, stabilizers, diluents that aid processing, adhesion promoters, flexibilizers, toughening agents, and fire retardants.

The amount of the optional additives used in the ester resin composition generally may be from 0 weight percent to 70 weight percent depending on the final formulation and end use application.

In the preparation of the toughened blend or composition of the present invention, the components are mixed together by known means in the art at conditions to form a curable composition, preferably in liquid form. The curable amphiphilic polyether block copolymer modified thermosetting ester resin composition of the present invention can be produced by mixing all the components of the composition together in any order.

Alternatively, the curable ester resin composition of the present invention can be produced by preparing a first composition comprising the thermosetting ester resin component and block copolymer component; and a second composition comprising one or more of the optional additive components. All other components useful in making the ester resin composition may be present in the same composition, or some may be present in the first composition, and some in the second composition. The first composition is then mixed with the second composition to form the curable ester resin composition. The curable ester resin composition mixture is then cured to produce a resin thermoset material.
Preferably, the curable ester resin composition is in the form of a solution, wherein the components of the composition are dissolved in a solvent. Such solution or varnish is used for producing a composite article.

Time and temperature of the process of preparing the modified ester resin composition is not critical, but generally the components can be mixed at a temperature of from 10 °C to 60°C, preferably from 20°C to 60 °C and more preferably from 25°C to 40°C for a sufficient time period until complete homogeneity is achieved.

The mixture of ester resin, block co-polymer, reactive monomer, and any other modifiers present in the composition of the present invention can be cured according to typical processes practiced by the industry. These processes include ambient temperature cure (for example, from 15 ºC to 40 ºC) to elevated temperature cures (for example, from 50 ºC to 200 ºC) using thermal, radiation or a combination of energy sources. As is generally known, the amount of time used for curing can range generally from seconds to several hours or days depending on the curing agent and the resin components. As is known, generally the curable composition can be cured in one step or multiple steps or the curable composition can be post-cured using a different temperature or energy source after the initial cure cycle.

The curable ester resin composition containing the polyether block copolymers of the present invention can be used in a variety of applications such as for example, for preparing composites. In general, composites can be prepared from the amphiphilic-modified liquid ester resins by methods familiar to those skilled in the art such as the methods described in Handbook of Composites, Section 2 Processing Methods, pp 321-512,Van Nostrand Reinhold Company, 1982.

The following working examples are given to illustrate the invention and should not be construed as limiting its scope. Unless otherwise indicated, all parts and percentages are by weight.

Some of the raw materials used in the Examples were as follows:
DERAKANE* 470-300 is an epoxy vinyl ester resin supplied by The Dow Chemical Company.
DERAKANE* 411-350 is an epoxy vinyl ester resin supplied by The Dow Chemical Company.
"PEO-PBO" stands for a poly(ethylene oxide)-poly(butylenes oxide) diblock copolymer.
"PEO-PBO-PEO" stands for a poly(ethylene oxide)-poly(butylenes oxide)-poly(ethylene oxide) triblock copolymer.
* Trademark of The Dow Chemical Company

### PREPARATORY EXAMPLE A: Preparation of PEO-PBO-PEO Triblock Copolymer

The basic procedure used to make the PEO-PBO-PEO triblock copolymer is based on Example 1 of U.S. Patent No. 5,600,019. The modifications to this procedure are listed below. The final PEO-PBO-PEO triblock product contained the following molar ratio of initiator/monomers.
1 mole propylene glycol/56 moles butylene oxide/62 moles of ethylene oxide

### Part A: Preparation of catalyzed initiator

Propylene glycol and an aqueous solution of KOH (46 weight percent solids) were used. The aqueous KOH was added to a reactor in an amount to give a final catalyst concentration of 9 weight percent. The water was not removed from the reaction product.

### Part B: Preparation of butylene oxide polymer

Butylene oxide was added in two batches. The amount of BO was adjusted so that an intermediate butylene oxide block had a number average molecular weight (Mn) of approximately 1000. When digestion was complete more of the aqueous KOH (46 weight percent) was added to the reactor so that the final catalyst concentration was approximately one weight percent. The water was removed from the reaction product under vacuum; then additional BO was added to the reactor to give the final butylene oxide polymer. The final butylene oxide polymer had a number average molecular weight of approximately 3500.

### Part C: Preparation of final PEO-PBO-PEO triblock copolymer

In order to obtain a liquid product, a mixture of ethylene oxide and butylene oxide (80/20 weight percent) was added to the butylene oxide prepared in Part B above. The incorporation of a small amount of butylene oxide in this step helps to disrupt the tendency of PEO to crystallize and form a solid. The amount of the added mixture was adjusted so that the final triblock had a number average molecular weight of approximately 6800 g/mole. The final reaction mixture was cooled to 60°C and,then neutralized through a magnesium silicate bed to give the final PEO-PBO-PEO triblock copolymer.

### EXAMPLES 1 and 2 and COMPARATIVE EXAMPLE A

A PEO-PBO-PEO triblock copolymer, prepared in accordance with PREPARATORY EXAMPLE A above, was added to DERAKANE 470-300 epoxy vinyl ester resin and agitated on a shaker until homogeneous. The resultant solutions were clear and low viscosity.

For curing, 400 g of the non-modified epoxy vinyl ester resin (EVER) [control] and 400 g of the modified EVER [Examples 1 and 2] was formulated with 1.2 g of cobalt naphthenate (Noury Nuodex, 6 percent cobalt solution) and 5.0 g methyl ethyl ketone peroxide (Norac Norox MEKP-925H). The mixture was centrifuged to remove any entrained air. Then the mixture was poured into aluminum molds prepared with mold release to prepare castings. All castings were cured at room temperature (20-22 °C) for 16 hours followed by a heat post-cure. The post cure conditions were as follows: 3 hours at 150°C + 2 hours at 175 °C.

The thermal and mechanical properties of the coatings were evaluated which include glass transition temperature, Tg (in accordance with ASTM D4065), fracture toughness (in accordance with ASTM D5045) and tensile elongation (in accordance with ASTM D638). The resin formulations and test results are shown in Table 1. The results in Table 1 show that the diblock copolymer increased the fracture toughness and elongation of the vinyl ester.

**Table 1**

| Resin Composition | Comparative Example A (control) | Example 1 | Example 2 |
|---|---|---|---|
| **Components** | | | |
| DERAKANE 470-300 epoxy vinyl ester resin | 100 | 100 | 100 |
| PEO-PBO-PEO triblock copolymer (phr) | 0.0 | 3.0 | 5.0 |
| Triblock copolymer in composition (percent) | 0.0 | 2.91 | 4.76 |

| **Properties** | | | |
|---|---|---|---|
| Post-cure condition | 1 | 1 | 1 |
| Tg, DMTA tan δ (°C) | 159.6 | 155.6 | 155.4 |
| Fracture toughness, K_{1c} (MPa.m^{1/2}) | 0.60 | 0.68 | 0.71 |
| Tensile elongation to break (percent) | 2.8 | 3.9 | 3.6 |

### EXAMPLES 3-6 and COMPARATIVE EXAMPLES B and C

A PEO-PBO-PEO triblock copolymer, prepared in accordance with PREPARATORY EXAMPLE A above, was added to DERAKANE 470-300 or DERAKANE 411-350 epoxy vinyl ester resins and agitated on shaker until homogeneous. The resultant solutions were clear and low viscosity.

Castings were prepared using a similar procedure as described in Example 1. The results are shown in Table 2. The post cure conditions were 2 hours at 120°C.

**Table 2**

| Resin Composition | Comparative Example B (control) | Example 3 | Example 4 | Comparative Example C (control) | Example 6 |
|---|---|---|---|---|---|
| **Components** | | | | | |
| DERAKANE 470-300 resin | 100 | 100 | 100 | | |
| DERAKANE 411-350 resin | | | | 100 | 100 |
| PEO-PBO-PEO triblock copolymer (phr) | 0.0 | 3.0 | 5.0 | 0.0 | 5.0 |
| Triblock copolymer in composition (percent) | 0.0 | 2.91 | 4.76 | 0.0 | 4.76 |

| **Properties** | | | | | |
|---|---|---|---|---|---|
| Post-cure condition | 2 | 2 | 2 | 2 | 2 |
| Tg, DMTA tan δ (°C) | 151.9 | 146.0 | 140.0 | 121.7 | 113.0 |
| Fracture toughness, K_{1c} (MPa.m^{1/2}) | 0.53 | 0.62 | 0.73 | 0.76 | 0.94 |
| Tensile elongation to break (percent) | 2.4 | 2.8 | 3.5 | 4.6 | 4.3 |

### EXAMPLES 7 and 8 and COMPARATIVE EXAMPLES D and E

### Part A: Preparation of catalyzed initiator

Diethylene glycol monomethyl ether (979.1 grams; 8.16 moles) and potassium hydroxide (29.84 grams; 85 weight percent) were combined in a closed system reaction vessel. The resultant mixture was heated to 110°C and stripped under vacuum to remove the water (<500 ppm) formed in the reaction.

### Part B: Preparation of butylene oxide block polymer

Catalyzed initiator (123.9 grams; approximately one mole of diethylene glycol monomethyl ether) prepared in Part A above was heated to 120°C. Butylene oxide (5355 grams; 74.38 moles) was slowly fed into the reactor such that the reaction temperature was maintained at 120°C. After addition was complete the mixture was digested until the pressure in the reactor no longer decreased. A portion of the reaction mixture was removed leaving 3052 grams of product in the reactor. More butylene oxide (1585 grams; 22.01 moles) was slowly added at a rate which maintained the reaction temperature at 120°C. When addition was complete the mixture was again digested until the pressure leveled off.

### Part C: Preparation of final butylene oxide-ethylene oxide block copolymer

Ethylene oxide (1830 grams; 41.59) was slowly added to the butylene oxide block polymer (4016 grams) prepared in Part B above such that the reaction temperature was maintained at 120°C. When addition was complete the mixture was digested until the pressure leveled off. Enough glacial acetic acid was then added to the mixture to bring the pH of the mixture to 6-7 (ASTM E70-90). The product was then transferred via a transfer line to a storage container while maintaining the product temperature above 50°C to prevent solidification of the product in the transfer line. The final product, PEO-PBO block copolymer, had a number average molecular weight of 5397 as determined by titration of the polymer OH end groups (ASTM D 4274-94, Method D).

### Part D: Preparation of Castings

The PEO-PBO block copolymer final product prepared in Part C above and the vinyl esters were warmed to 45-50 °C to facilitate mixing. The warm copolymer was added to either DERAKANE 470-300 or DERAKANE 411-350 vinyl ester resins and agitated on shaker until homogeneous. The resultant solutions were clear and low viscosity.

Castings were prepared using a similar procedure as described in Example 1 except that the post cure conditions were varied by type of vinyl ester. For Comparative Example C and Example 7, the post cure conditions were 3 hours at 150 °C plus 2 hours at 175°C; and for Comparative Example D and Example 8 the post cure conditions were 2 hours at 120°C.

The results obtained in this Example are shown in Table 3.

**Table 3**

| Resin Composition | Comparative Example D (control) | Example 7 | Comparative Example E (control) | Example 8 |
|---|---|---|---|---|
| **Components** | | | | |
| DERAKANE 470-300 resin | 100 | 100 | | |
| DERAKANE 411-350 resin | | | 100 | 100 |
| PBO-PEO diblock copolymer (phr) | 0.0 | 5.0 | 0.0 | 5.0 |
| Diblock copolymer in composition (percent) | 0.0 | 4.76 | 0.0 | 4.76 |

| **Properties** | | | | |
|---|---|---|---|---|
| Tg, DMTA tan δ (°C) | 159.6 | 156.0 | 121.7 | 119.0 |
| Fracture toughness, K_{1c} (MPa.m^{1/2}) | 0.56 | 0.78 | 0.76 | 2.88 |
| Tensile elongation to break (percent) | 2.8 | 2.7 | 4.6 | 3.5 |

## Claims

1. A curable ester resin composition comprising
(a) an ester resin;
(b) at least one copolymerizable reactive monomer; and
(c) an amphiphilic block copolymer containing at least one ester resin miscible block segment and at least one ester resin immiscible block segment; such that when the ester resin composition is cured, the toughness of the resulting cured ester resin composition is increased.

2. The composition of Claim 1 wherein amphiphilic block copolymer is an amphiphilic polyether block copolymer.

3. The composition of Claim 2 wherein the miscible block segment comprises at least one polyether structure; and wherein the immiscible block segment comprises at least one polyether structure.

4. The composition of Claim 3 wherein the immiscible block segment comprises at least one polyether structure provided that the polyether structure of said immiscible block segment contains at least one or more alkylene oxide monomer units having at least four carbon atoms.

5. The composition of Claim 1 wherein the amphiphilic block copolymer is selected from the group consisting of a diblock, a linear triblock, a linear tetrablock, a higher order multiblock structure; a branched block structure; or a star block structure.

6. The composition of Claim 1 wherein the miscible block segment contains a polyethylene oxide block, a polypropylene oxide block, or a poly(ethylene oxide-co-propylene oxide) block; and the immiscible block segment contains a polybutylene oxide block, a polyhexylene oxide block, a polydodecylene oxide block, or a polyhexadecylene oxide block.

7. The composition of Claim 1 wherein the at least one of the miscible segments of the amphiphilic block copolymer is a poly(ethylene oxide); and the at least one of the immiscible segments of the amphiphilic block copolymer is a poly(butylene oxide).

8. The composition of Claim 1 wherein the amphiphilic block copolymer is poly(ethylene oxide)-b-poly(butylene oxide) or poly(ethylene oxide)-b-poly(butylene oxide)-b-poly(ethylene oxide).

9. The composition of Claim 1 wherein the amphiphilic block copolymer has a molecular weight of from 1000 to 30,000.

10. The composition of Claim 1 wherein the ratio of the miscible segments of the amphiphilic block copolymer to the immiscible segments of the amphiphilic block copolymer is from 10:1 to 1:10.

11. The composition of Claim 1 wherein the amphiphilic block copolymer is present in an amount of from 0.1 weight percent to 50 weight percent based on the weight of the composition.

12. A composition of Claim 1 including a homopolymer of identical composition to the ester resin immiscible block segment.

13. A composition of Claim 1 including a homopolymer of identical composition to the ester resin miscible block segment.

14. A composition of Claim 1 including a polymer that is miscible in the ester resin immiscible block and thus changes the morphology of the immiscible block in the thermoset network.

15. The composition of Claim 1 wherein the ester resin is an epoxy vinyl ester resin containing from 0 percent to 50 percent monomeric styrene.

16. The composition of Claim 1 wherein the ester resin is an epoxy vinyl ester resin comprising the reaction product of (a) a polyepoxide resin; and (b) an unsaturated carboxylic acid, or a mixture of an unsaturated carboxylic acid and a maleic anhydride.

17. The composition of Claim 16 wherein the polyepoxide resin has an epoxide equivalent weight of from 150 to 3000.

18. The composition of Claim 16 wherein the unsaturated carboxylic acid has from 85 percent to 110 percent acid equivalents to epoxy equivalents.

19. The composition of Claim 1 wherein the copolymerizable reactive monomer is selected from the group consisting of styrene, vinyl toluene, para-methyl styrene, divinyl benzene, and methyl methacrylate.

20. The composition of Claim 1 wherein the copolymerizable reactive monomer concentration in the composition is from 0.1 weight percent to 70 weight percent.

21. The composition of Claim 1 wherein the ester resin is an unsaturated polyester resin having the general structural formula:
(R-O-C(=O)-R'-C(=O)-O)ₓ(R-O-C(=O)-CH=CH-C(=O)-O)_{y}
wherein R and R' are alkylene or arylene radicals in the diol and saturated acid respectively, and x and y are variable numbers which depend upon the composition and condensation conditions.

22. The composition of Claim 1 wherein the ester resin is an unsaturated polyester resin comprising the reaction product of (a) an ethylenically unsaturated dicarboxylic or polycarboxylic acid or an anhydride, (b) a saturated dicarboxylic acid, and (c) a diol or a polyol.

23. The composition of Claim 1 including a curing catalyst.

24. The composition of Claim 1 including a pigment.

25. A process for preparing a curable ester resin composition comprising mixing
(a) an ester resin;
(b) at least one copolymerizable reactive monomer; and
(c) an amphiphilic block copolymer containing at least one ester resin miscible block segment and at least one ester resin immiscible block segment; such that when the ester resin composition is cured, the toughness of the resulting cured ester resin composition is increased.

26. A composite comprising the composition of Claim 1.

## Patentansprüche

1. Härtbare Esterharzzusammensetzung, die Folgendes umfasst:
(a) ein Esterharz;
(b) mindestens ein copolymerisierbares reaktionsfähiges Monomer; und
(c) ein amphiphiles Blockcopolymer, das mindestens ein mit Esterharz mischbares Blocksegment und mindestens ein mit Esterharz nicht mischbares Blocksegment enthält; so dass beim Härten der Esterharzzusammensetzung die Zähigkeit der resultierenden gehärteten Esterharzzusammensetzung erhöht wird.

2. Zusammensetzung nach Anspruch 1, wobei das amphiphile Blockcopolymer ein amphiphiles Polyetherblockcopolymer ist.

3. Zusammensetzung nach Anspruch 2, wobei das mischbare Blocksegment mindestens eine Polyetherstruktur umfasst; und wobei das nicht mischbare Blocksegment mindestens eine Polyetherstruktur umfasst.

4. Zusammensetzung nach Anspruch 3, wobei das nicht mischbare Blocksegment mindestens eine Polyetherstruktur umfasst, vorausgesetzt die Polyetherstruktur des nicht mischbaren Blocksegments enthält mindestens eine oder mehrere monomere Alkylenoxideinheiten mit mindestens vier Kohlenstoffatomen.

5. Zusammensetzung nach Anspruch 1, wobei das amphiphile Blockcopolymer aus der aus einer Diblock-, einer linearen Triblock-, einer linearen Tetrablock- sowie einer Mehrblockstruktur höherer Ordnung; einer verzweigten Blockstruktur; oder einer Sternblockstruktur bestehenden Gruppe ausgewählt ist.

6. Zusammensetzung nach Anspruch 1, wobei das mischbare Blocksegment einen Polyethylenoxidblock, einen Polypropylenoxidblock oder einen Poly(ethylenoxid-Co-propylenoxid)-Block enthält; und das nicht mischbare Blocksegment einen Polybutylenoxidblock, einen Polyhexylenoxidblock, einen Polydodecylenoxidblock oder einen Polyhexadecylenoxidblock enthält.

7. Zusammensetzung nach Anspruch 1, wobei das mindestens eine der mischbaren Segmente des amphiphilen Blockcopolymers ein Poly(ethylenoxid) ist; und das mindestens eine der nicht mischbaren Segmente des amphiphilen Blockcopolymers ein Poly(butylenoxid) ist.

8. Zusammensetzung nach Anspruch 1, wobei das amphiphile Blockcopolymer Poly(ethylenoxid)-b-Poly(butylenoxid) oder Poly(ethylenoxid)-b-Poly(butylenoxid)-b-Poly(ethylenoxid) ist.

9. Zusammensetzung nach Anspruch 1, wobei das amphiphile Blockcopolymer ein Molekulargewicht von 1000 bis 30.000 hat.

10. Zusammensetzung nach Anspruch 1, wobei das Verhältnis der mischbaren Segmente des amphiphilen Blockcopolymers zu den nicht mischbaren Segmenten des amphiphilen Blockcopolymers von 10:1 bis 1:10 beträgt.

11. Zusammensetzung nach Anspruch 1, wobei das amphiphile Blockcopolymer in einer Menge von 0,1 Gew.-% bis 50 Gew.-% vorliegt, bezogen auf das Gewicht der Zusammensetzung.

12. Zusammensetzung nach Anspruch 1 mit einem Homopolymer von identischer Zusammensetzung wie das mit Esterharz nicht mischbare Blocksegment.

13. Zusammensetzung nach Anspruch 1 mit einem Homopolymer von identischer Zusammensetzung wie das mit Esterharz mischbare Blocksegment.

14. Zusammensetzung nach Anspruch 1 mit einem Polymer, das in den mit Esterharz nicht mischbaren Block mischbar ist und somit die Morphologie des nicht mischbaren Blocks in dem hitzehärtbaren Netzwerk ändert.

15. Zusammensetzung nach Anspruch 1, wobei das Esterharz ein Epoxyvinylesterharz ist, das von 0 Prozent bis 50 Prozent monomeres Styrol enthält.

16. Zusammensetzung nach Anspruch 1, wobei das Esterharz ein Epoxyvinylesterharz ist, welches das Reaktionsprodukt von (a) einem Polyepoxidharz; und (b) einer ungesättigten Carbonsäure, oder eine Mischung einer ungesättigten Carbonsäure mit einem Maleinsäureanhydrid umfasst.

17. Zusammensetzung nach Anspruch 16, wobei das Polyepoxidharz ein Epoxidäquivalentgewicht von 150 bis 3000 hat.

18. Zusammensetzung nach Anspruch 16, wobei die ungesättigte Carbonsäure von 85 Prozent bis 110 Prozent Säureäquivalente bezogen auf Epoxidäquivalente hat.

19. Zusammensetzung nach Anspruch 1, wobei das copolymerisierbare reaktionsfähige Monomer aus der aus Styrol, Vinyltoluol, para-Methylstyrol, Divinylbenzol und Methylmethacrylat bestehenden Gruppe ausgewählt ist.

20. Zusammensetzung nach Anspruch 1, wobei die Konzentration an copolymerisierbarem reaktionsfähigem Monomer in der Zusammensetzung von 0,1 Gew.-% bis 70 Gew.-% beträgt.

21. Zusammensetzung nach Anspruch 1, wobei das Esterharz ein ungesättigtes Polyesterharz ist mit der allgemeinen Strukturformel:
(R-O-C(=O)-R'-C(=O)-O)ₓ(R-O-C(=O)-CH=CH-C(=O)-O)_{y}
worin R und R' Alkylen- oder Arylenradikale in dem Diol bzw. der gesättigten Säure sind und x und y variable Zahlen sind, die von der Zusammensetzung und den Kondensationsbedingungen abhängen.

22. Zusammensetzung nach Anspruch 1, wobei das Esterharz ein ungesättigtes Polyesterharz ist, welches das Reaktionsprodukt von (a) einer ethylenisch ungesättigten Dicarbon- oder Polycarbonsäure oder einem Anhydrid, (b) einer gesättigten Dicarbonsäure und (c) einem Diol oder einem Polyol ist.

23. Zusammensetzung nach Anspruch 1 mit einem Härtungskatalysator.

24. Zusammensetzung nach Anspruch 1 mit einem Pigment.

25. Verfahren zur Herstellung eines härtbaren Esterharzzusammensetzung, bei dem Folgendes gemischt wird:
(a) ein Esterharz;
(b) mindestens ein copolymerisierbares reaktionsfähiges Monomer; und
(c) ein amphiphiles Blockcopolymer, das mindestens ein mit Esterharz mischbares Blocksegment und mindestens ein mit Esterharz nicht mischbares Blocksegment enthält; so dass beim Härten der Esterharzzusammensetzung die Zähigkeit der resultierenden gehärteten Esterharzzusammensetzung erhöht wird.

26. Verbundstoff, der die Zusammensetzung nach Anspruch 1 umfasst.

## Revendications

1. Composition de résine ester durcissable, comprenant :
a) une résine ester ;
b) au moins un monomère réactif copolymérisable ;
c) et un copolymère à blocs amphiphile, comportant au moins un segment bloc miscible à la résine ester et au moins un segment bloc non miscible à la résine ester, de sorte que, après durcissement de la composition de résine ester, la ténacité de la composition de résine ester durcie résultante est augmentée.

2. Composition conforme à la revendication 1, dans laquelle le copolymère à blocs amphiphile est un copolymère polyéther amphiphile à blocs.

3. Composition conforme à la revendication 2, dans laquelle le segment bloc miscible comporte au moins une structure de type polyéther, et le segment bloc non miscible comporte au moins une structure de type polyéther.

4. Composition conforme à la revendication 3, dans laquelle le segment bloc non miscible contient au moins une structure de type polyéther, étant entendu que la structure de type polyéther dudit segment bloc non miscible comporte au moins un ou plusieurs motif(s) monomère(s) de type oxyde d'alkylène comportant au moins quatre atomes de carbone.

5. Composition conforme à la revendication 1, dans laquelle le copolymère polyéther amphiphile à blocs est choisi dans l'ensemble formé par ceux qui présentent une structure en deux blocs, une structure en trois blocs linéaire, une structure en quatre blocs linéaire, une structure en blocs en nombre plus élevé, une structure en blocs ramifiée ou une structure en blocs étoilée.

6. Composition conforme à la revendication 1, dans laquelle le segment bloc miscible contient un bloc poly(oxyéthylène), un bloc poly(oxypropylène), ou un bloc poly(oxyéthylène-co-oxypropylène), et le segment bloc non miscible contient un bloc poly(oxybutylène), un bloc poly(oxyhexylène), un bloc poly(oxydodécylène), ou un bloc poly(oxyhexadécylène).

7. Composition conforme à la revendication 1, dans laquelle le segment miscible ou au moins l'un des segments miscibles du copolymère à blocs amphiphile est un poly(oxyéthylène), et le segment non miscible ou au moins l'un des segments non miscibles du copolymère à blocs amphiphile est un poly(oxybutylène).

8. Composition conforme à la revendication 1, dans laquelle le copolymère à blocs amphiphile est un poly(oxyéthylène)-b-poly(oxybutylène) ou un poly(oxyéthylène)-b-poly(oxybutylène)-b-poly(oxyéthylène).

9. Composition conforme à la revendication 1, dans laquelle le copolymère à blocs amphiphile présente une masse moléculaire de 1 000 à 30 000.

10. Composition conforme à la revendication 1, dans laquelle le rapport des segments miscibles du copolymère à blocs amphiphile aux segments non miscibles du copolymère à blocs amphiphile vaut de 10/1 à 1/10.

11. Composition conforme à la revendication 1, dans laquelle le copolymère à blocs amphiphile se trouve en une quantité représentant de 0,1 à 50 % du poids de la composition.

12. Composition conforme à la revendication 1, qui contient un homopolymère de constitution identique à celle du segment bloc non miscible à la résine ester.

13. Composition conforme à la revendication 1, qui contient un homopolymère de constitution identique à celle du segment bloc miscible à la résine ester.

14. Composition conforme à la revendication 1, qui contient un polymère qui est miscible au bloc non miscible à la résine ester et par là modifie la morphologie prise par le bloc non miscible au sein du réseau thermodurci.

15. Composition conforme à la revendication 1, dans laquelle la résine ester est une résine époxyde-vinylester contenant de 0 à 50 % en poids de styrène monomère.

16. Composition conforme à la revendication 1, dans laquelle la résine ester est une résine époxyde-vinylester comprenant le produit de réaction
a) d'une résine polyépoxyde
b) et d'un acide carboxylique insaturé ou d'un mélange d'un acide carboxylique insaturé et d'un anhydride de type maléique.

17. Composition conforme à la revendication 16, dans laquelle la résine polyépoxyde présente un poids d'équivalent époxyde valant de 150 à 3000.

18. Composition conforme à la revendication 16, dans laquelle l'acide carboxylique insaturé apporte de 85 à 110 % d'équivalents acide, par rapport aux équivalents époxyde.

19. Composition conforme à la revendication 1, dans laquelle le monomère réactif copolymérisable est choisi dans l'ensemble constitué par les styrène, vinyl-toluène, para-méthyl-styrène, divinyl-benzène et méthacrylate de méthyle.

20. Composition conforme à la revendication 1, dans laquelle la concentration de monomère réactif copolymérisable vaut de 0,1 à 70 % en poids.

21. Composition conforme à la revendication 1, dans laquelle la résine ester est une résine polyester insaturé présentant la formule structurale générale suivante :
(R-O-C(=O)-R'-C(=O)-O)ₓ(R-O-C(=O)-CH=CH-C(=O)-O)_{y}
dans laquelle R et R' représentent des restes alcanediyle ou arènediyle provenant respectivement d'un diol et d'un acide saturé, et les indices x et y sont des nombres variables qui dépendent de la composition et des conditions de condensation.

22. Composition conforme à la revendication 1, dans laquelle la résine ester est une résine polyester insaturé comprenant le produit de réaction
a) d'un acide dicarboxylique ou polycarboxylique à insaturation éthylénique ou d'un anhydride d'un tel acide,
b) d'un acide dicarboxylique saturé,
c) et d'un diol ou d'un polyol.

23. Composition conforme à la revendication 1, qui contient un catalyseur de durcissement.

24. Composition conforme à la revendication 1, qui contient un pigment.

25. Procédé de préparation d'une composition de résine ester durcissable, comportant le fait de mélanger :
a) une résine ester ;
b) au moins un monomère réactif copolymérisable ;
c) et un copolymère à blocs amphiphile, comportant au moins un segment bloc miscible à la résine ester et au moins un segment bloc non miscible à la résine ester, de sorte que, après durcissement de la composition de résine époxyde, la ténacité de la composition de résine époxyde durcie résultante est augmentée.

26. Composite comprenant une composition conforme à la revendication 1.
